# EUROPÄISCHE PATENTANMELDUNG

(11) **EP 2 998 635 A1**
(43) Veröffentlichungstag der Anmeldung: **23.03.2016**
(21) Anmeldenummer: 14185485.1
(22) Anmeldetag: 19.09.2014
(51) Int. Cl.: F16L 59/15, F16L 9/133

(54) **Kunststoffrohr**

(71) Anmelder: HakaGerodur AG, 9200 Gossau (CH)
(72) Erfinder: Vollenweider, Bruno, 8864 Reichenburg (CH); Mayer, Peter, 8717 Benken (CH)
(74) Vertreter: Schaad, Balass, Menzl & Partner AG

(57) **Zusammenfassung**

Die vorliegende Erfindung betrifft ein Kunststoffrohr (10) zur Leitung von Flüssigkeiten, bestehend aus mindestens zwei konzentrisch angeordneten, miteinander verbundenen Schichten. Eine erste Schicht (13) besteht aus einem thermoplastischen Kunststoffmaterial und weist eine Dichte von weniger als 1.0 g/cm³ auf. Eine zweite Schicht (12) weist eine Dichte von mehr als 1.0 g/cm³ auf. Die zweite Schicht (12) umfasst vorzugsweise ein Kunststoffmaterial mit einem eingearbeiteten Füllstoff.

## Beschreibung

Die vorliegende Erfindung betrifft ein Kunststoffrohr zur Leitung von Flüssigkeiten oder anderen fluiden Stoffen, das aus zwei oder mehr Schichten besteht.

Rohrleitungen dienen dem Transport von Fluiden (Gase, Flüssigkeiten oder riesel- bzw. pumpfähige Feststoffe). Bestandteile sind insbesondere Rohre, Rohrformteile, Ausdehnungsstücke, Armaturen, Dichtungen, Verbindungselemente wie Flansche, Fittinge, Verschraubungen, Muffen sowie die Befestigungselemente (Rohrunterstützung). Im weiteren Sinne gehören auch noch die Pumpen, eventuelle Wärme- oder Kältedämmung sowie Überwachungssysteme zu dieser Zusammenstellung. Diese Einzelteile unterliegen häufig einer Normung. So ist es möglich, eine Rohrleitung wie aus einem Baukasten zusammenzustellen. Einzelne Rohrleitungen können zu ganzen Netzen zusammengefügt werden.

Rohrleitungen werden in der Nennweite von wenigen Millimetern bis zu einigen Metern ausgeführt und können im Falle einer Pipeline die Länge von Tausenden von Kilometern erreichen. Die Nenndruckstufen können vom Vakuum bis zu einigen hundert bar reichen. Hydraulikrohre haben Außendurchmesser zwischen 4 und 80 mm und sind für Berechnungsdrücke zwischen 120 und 750 bar ausgelegt (nach EN 13480 für Werkstoff P235TR2). Die Wahl der Werkstoffe einer Rohrleitung richtet sich nach statischen und dynamischen Belastungen (z. B. Nenndruckstufe, Verkehrslasten, Erddrücke, Drücke von innen oder außen, Druckstoss), mechanischen Beanspruchungen (beispielsweise Fliessgeschwindigkeiten, Geschiebestoffe), korrosiver Beanspruchung sowie Art und Temperatur des zu transportierenden Materials.

Je nach Temperatur des zu transportierenden Materials oder der Umgebungstemperatur kann eine Wärmedämmung, eine Rohrbegleitheizung oder -kühlung, aber auch z. B. eine Lecküberwachung der Rohrleitung erforderlich sein.

In den vergangenen Jahren haben Rohrleitungen aus Kunststoffen zunehmend an Bedeutung gewonnen. Sie sind mittlerweile mit 54% Marktanteil und einem Volumen von 2'500'000 Tonnen/Jahr die wichtigsten Werkstoffe für Rohrsysteme in Europa. Am häufigsten werden Systeme aus Polyethylen (PE), vernetztem Polyethylen (PE-X), Polypropylen (PP) und Polyvinylchlorid (PVC-U) in den Bereichen Wasserversorgung, Abwasserentsorgung, Gasversorgung, Wärmeversorgung (nur PE-X und PP), und Industrierohrleitungen eingesetzt.

Ein herausragendes Merkmal von Kunststoffen ist, dass sich ihre technischen Eigenschaften, wie Formbarkeit, Härte, Elastizität, Bruchfestigkeit, Temperatur- und Wärmeformbeständigkeit sowie chemische Beständigkeit, durch die Wahl von Ausgangsmaterial, Herstellungsverfahren und Beimischung von Additiven in weiten Grenzen variieren lassen. Kunststoffe werden zu Formteilen, Halbzeugen, Fasern oder Folien weiterverarbeitet. Sie dienen als Verpackungsmaterialien, Textilfasern, Wärmedämmung, Rohre, Bodenbeläge, Bestandteile von Lacken, Klebstoffen und Kosmetika, in der Elektrotechnik als Material für Isolierungen, Leiterplatten, Gehäuse, im Fahrzeugbau als Material für Reifen, Polsterungen, Armaturenbretter, Benzintanks und vieles mehr.

Kunststoffe zeichnen sich, verglichen mit keramischen oder metallischen Werkstoffen, durch eine Reihe von ungewöhnlichen Eigenschaften aus:
- Die Dichte der meisten Kunststoffe liegt zwischen 0.8 und 2.2 g/cm³. Sie sind damit erheblich leichter als metallische (um 8 g/cm³) oder keramische Werkstoffe (etwa 6 g/cm³).
- Obwohl die Festigkeiten vergleichsweise niedrig sind, brechen Kunststoffteile weniger leicht als beispielsweise Keramik oder Glas durch ihre zumeist gute Zähigkeit. Deshalb werden Gebrauchsgegenstände für Kinder und Spielzeug vielfach aus Kunststoff gefertigt.
- Viele Kunststoffe sind im Gegensatz zu Metallen aufgrund ihrer organischen Natur beständig gegenüber anorganischen Medien. Dies schließt Mineralsäuren, Laugen, sowie wässrige Salzlösungen ein. Im Gegensatz zu Metallen reagieren sie allerdings empfindlich auf organische Lösungsmittel, wie Alkohole, Aceton oder Benzin. Dennoch gelang es auch auf diesem Gebiet, beständige Kunststoffe zu entwickeln. Ein Beispiel ist der Kraftstofftank aus Polyethylen in modernen Personenkraftwagen. Er ist überaus beständig gegenüber Korrosion und trotzdem unempfindlich gegenüber dem Benzin.
- Die gängigen Verarbeitungstemperaturen für Kunststoffe liegen im Bereich von 180 bis 300 °C. Während Metalle bei hohen Temperaturen aufwändig gegossen werden müssen und Einschränkungen bezüglich der Gussformen bestehen, lassen sich aus Thermoplasten auch kompliziertere Formteile mit vergleichsweise geringem Aufwand fertigen (z.B. mittels Extrusion oder Spritzguss). Gleichzeitig können in einem Verarbeitungsschritt Additive, wie Farbpigmente oder Fasern, in das Material eingearbeitet werden, die sich bei den hohen Temperaturen des Metallgießens oder des Sinterns von Keramik zersetzen würden.
- Die Wärmeleitfähigkeit von Kunststoffen ist nur einen Bruchteil so groß wie die von Metallen. Da aus diesem Grund bei einer Berührung vergleichsweise wenig Wärmeenergie von der Hand übertragen wird (Kunststoffe sich also bei niedrigen Temperaturen dennoch warm anfühlen), werden Griffe an Werkzeugen oder Geländern gerne aus Kunststoff hergestellt oder damit überzogen.
- Werkstoffe wie Schäume, Vliese und Flocken isolieren vor allem durch den Gehalt an (räumlich fixierter) Luft. Kunststoffe als Matrixmaterial fördern die Isolierwirkung; wie etwa in Dämmstoffplatten, Textilien oder Matratzen.

Je nach gewünschter Anwendung und den damit verbundenen Anforderungen können unterschiedliche Eigenschaften besonders wichtig und damit ein anderes Kunststoffmaterial am besten geeignet sein.

Zusätzlich können die Eigenschaften von Kunststoffen durch die Zugabe von Additiven, wie Weichmachern, Stabilisatoren, Farbmitteln, Füllstoffen oder Verstärkungsstoffen, oder durch das Auftragen einer Beschichtung beeinflusst werden.

Der vorliegenden Erfindung liegt die Aufgabe zugrunde, ein Kunststoffrohr zur Leitung von Flüssigkeiten bereit zu stellen, das sich besonders einfach und kostengünstig herstellen lässt, eine gute Temperatur- und Formstabilität aufweist und zudem gut an die Erfordernisse des gewünschten Einsatzgebiets angepasst ist.

Diese Aufgabe wird gelöst durch das Kunststoffrohr gemäss Anspruch 1, seine Verwendung gemäss Anspruch 14, sowie das Verfahren zur Herstellung einer Leitung gemäss Anspruch 15. Bevorzugte Ausführungsformen sind Gegenstand der abhängigen Ansprüche.

Das Kunststoffrohr gemäss der vorliegenden Erfindung eignet sich zur Leitung von Flüssigkeiten und anderen Fluiden. Es besteht aus mindestens zwei konzentrisch angeordneten, miteinander verbundenen Schichten. Eine erste Schicht besteht aus einem thermoplastischen Kunststoffmaterial und weist eine Dichte von weniger als 1.0 g/cm³ auf. Eine zweite Schicht weist eine Dichte von mehr als 1.0 g/cm³ auf.

Durch die Verwendung von mindestens zwei Schichten mit unterschiedlicher Dichte können die Eigenschaften des Kunststoffrohrs sehr genau an das Anforderungsprofil einer gewünschten Verwendung angepasst werden. Je nach Anwendung kann beispielsweise eine spezielle Kombination von Eigenschaften (Flexibilität und chemische Stabilität, Wärme-/Schallisolation und Gewicht, tiefe Verarbeitungstemperatur und Festigkeit, etc.) nötig sein.

Je nach Einsatzgebiet kann es auch sehr wichtig sein, dass das Kunststoffrohr eine bestimmte durchschnittliche Dichte aufweist. Dies ist beispielsweise dann wichtig, wenn das Rohr in Wasser oder einer anderen Flüssigkeit gelagert werden soll und eine bestimmte minimale Dichte nötig ist, um der Auftriebswirkung entgegenzuwirken, oder dann, wenn das üblicherweise verwendete Material eine relativ hohe Dichte aufweist und das Gesamtgewicht verringert werden soll. Durch Kombinieren einer Schicht mit einer niedrigen Dichte mit einer Schicht mit hoher Dichte kann das Eigengewicht des Kunststoffrohrs für die gewünschte Anwendung optimiert werden.

Daneben lässt sich ein Kunststoffrohr mit zwei oder mehr Schichten sehr einfach und kostengünstig herstellen, beispielsweise durch Co-Extrusion oder Ummanteln. Dabei können im Wesentlichen Rohre mit beliebigen Längen und Querschnitten geformt werden. Typischerweise weisen die Rohre aber einen runden, insbesondere einen kreisförmigen, Querschnitt auf.

Beim Kunststoffrohr gemäss der vorliegenden Erfindung sind die mindestens zwei Schichten konzentrisch angeordnet. Dies führt dazu, dass eine der Schichten von der anderen umgeben ist bzw. dass eine Schicht im Innern der anderen angeordnet ist. Diesbezüglich ist festzuhalten, dass im Rahmen der vorliegenden Anmeldung die Bezeichnungen "erste" bzw. "zweite Schicht" keinerlei Angabe zur relativen Anordnung der beiden Schichten zueinander beinhaltet. Die Schichten sind lediglich zur Unterscheidung voneinander nummeriert und können in beliebiger Reihenfolge angeordnet sein.

Zudem umfasst das erfindungsgemässe Kunststoffrohr mindestens zwei konzentrische Schichten, d.h. es können auch drei oder mehr Schichten vorliegen. Dabei können die weiteren Schichten innerhalb der ersten und zweiten Schicht, zwischen den beiden Schichten, oder auch ausserhalb der ersten und zweiten Schicht angeordnet sein. Weiter ist es auch möglich, dass zwischen einzelnen Schichten zusätzlich ein Haftvermittler vorhanden ist.

Die erste Schicht kann beispielsweise ein Kunststoffmaterial wie ein Polyolefin (z.B. Polyethylen (PE) oder Polypropylen (PP)), Polyethylenterephthalat (PET), Acrylnitril-Butadien-Styrol (ABS), Polystyrol PS), Styrol-Butadien (SB) und Mischungen davon umfassen.

Gemäss einer bevorzugten Ausführungsform weist die zweite Schicht eine Dichte von 1.0 bis 5.0 g/cm³ auf, vorzugsweise von 2.0 bis 3.0 g/cm³ und besonders bevorzugt von 2.3 bis 2.9 g/cm³. Wenn die zweite Schicht eine solche hohe Dichte aufweist, reicht bereits eine relativ dünne Schicht aus, um die geringe Dichte der ersten Schicht zu kompensieren. Dadurch können nicht nur Material und damit Kosten gespart werden, sondern der Gesamtquerschnitt des Rohrs kann auch kleiner gehalten werden. Besonders bevorzugt weist die zweite Schicht eine Dichte von ca. 2.5 g/cm³ auf.

Gemäss einer bevorzugten Ausführungsform besteht die zweite Schicht aus einem Kunststoffmaterial mit einem eingearbeiteten Füllstoff.

Im Rahmen der vorliegenden Anmeldung wird unter einem "Kunststoffmaterial mit einem eingearbeiteten Füllstoff" ein Kunststoffmaterial verstanden, das mit einem Füllstoff versetzt ist und mit diesem einen Stoffverbund gebildet hat. Es handelt sich hierbei also quasi um einen Verbundwerkstoff, der mindestens ein Kunststoffmaterial und mindestens einen Füllstoff umfasst.

Füllstoffe sind klassische Streckmittel, durch welche die Herstellung von Kunststoff verbilligt werden kann. "Aktive Füllstoffe" verbessern zusätzlich die mechanischen Eigenschaften des Materials. Wichtige Füllstoffe sind unter anderem: Kreide, Sand, Kieselgur, Glasfasern und -kugeln, Zinkoxid, Quarz, Holzmehl, Stärke, Graphit, Russ und Talk. Wichtig können Füllstoffe auch sein, um das Brandverhalten der Kunststoffe zu minimieren.

Besonders bevorzugt liegt der eingearbeitete Füllstoff in Form von Pulver, Plättchen, Kugeln und/oder Fasern vor. Dadurch lässt er sich gut in das Kunststoffmaterial einarbeiten, liegt darin möglichst homogen verteilt vor und geht auch eine stabile Verbindung zum Kunststoffmaterial ein. Diese Verbindung zum Kunststoffmaterial kann mechanischer Art (Füllstoff wird vom Kunststoff umschlossen; "Formschluss") oder auch chemischer Art sein. Zudem lässt sich ein Füllstoff in Form von relativ kleinen Partikeln auch sehr genau dosieren, so dass das gewünschte Verhältnis von Kunststoffmaterial zu Füllstoff genau eingestellt werden kann.

Besonders bevorzugt umfasst der eingearbeitete Füllstoff ein Mineral, Kreide, Glas und/oder Metall, insbesondere Bariumsulfat und/oder Magnetit. Diese Füllstoffe haben die gewünschte hohe Dichte und lassen sich zudem gut in ein Kunststoffmaterial einarbeiten.

Besonders bevorzugt umfasst der eingearbeitete Füllstoff Metall. Solche "metallische Füllstoffe" haben den Vorteil, dass sie eine antistatische Wirkung haben und dass durch sie die elektrische und thermische Leitfähigkeit des Rohrs erhöht werden kann. Daneben ermöglichen metallische Füllstoffe auch, dass ein damit versehendes Kunststoffrohr geortet werden kann.

Besonders bevorzugt weist der eingearbeitete Füllstoff eine höhere Dichte auf als das Kunststoffmaterial der zweiten Schicht. Insbesondere ist beim Füllstoff eine Dichte von mindestens 2.0 g/cm³, besonders bevorzugt von mindestens 4.0 g/cm³, vorteilhaft. Dadurch lässt sich durch genaue Dosierung des Füllstoffs die Dichte des Materials, das die zweite Schicht bildet, auf den gewünschten Wert einstellen.

Besonders bevorzugt umfasst das Kunststoffmaterial der zweiten Schicht ein Polyolefin, insbesondere Polyethylen, Polypropylen, Polybuten oder eine Mischung davon. Diese Kunststoffe eignen sich besonders gut für die Herstellung von Rohren zur Leitung von Flüssigkeiten, weil sie wasserdicht sind, sich gut verarbeiten lassen, die nötige Stabilität aufweisen und sich auch noch gut mit einem Füllstoff mischen lassen. Zudem sind diese Materialien korrosionsbeständig, flexibel und unempfindlich gegen Druckschläge, beständig gegen viele Chemikalien und weisen eine lange Nutzungsdauer auf, d.h. sie sind langlebig.

Gemäss einer bevorzugten Ausführungsform weist die erste Schicht isolierende Eigenschaften auf. Je nach Anwendung des Kunststoffrohrs können isolierende Eigenschaften von Vorteil oder funktionstechnisch gefordert sein. So kann es beispielsweise bei der Leitung einer warmen oder kalten Flüssigkeit durch eine Umgebung mit deutlich anderer Temperatur wichtig sein, dass ein Abkühlen bzw. Aufwärmen der Flüssigkeit verhindert wird. Dies verhindert auch die Entstehung von Kondenswasser. Bei einer Wasserleitung in einem (Mehrfamilien-)Haus kann es sinnvoll sein, eine Schallisolation vorzusehen, so dass die Bewohner durch das Geräusch des Wasserflusses nicht gestört werden. Auch eine elektrische oder optische Isolation kann sinnvoll oder vorteilhaft sein. Je nach Anwendung kann es zudem wichtig sein, dass die Isolation druckbeständig ist und sich nicht durch den Druck eines Mediums verformen lässt und dabei womöglich die isolierende(n) Eigenschaft(en) verliert.

Besonders bevorzugt weist die erste Schicht Wärme- oder Schall-isolierende Eigenschaften auf.

Gemäss einer bevorzugten Ausführungsform umfasst die isolierende erste Schicht ein geschäumtes Polymer. Geschäumte Polymere zeichnen sich durch den Einschluss von Luft oder anderen Gasen aus, die üblicherweise zur Isolation beitragen. Zudem wird durch den Gaseinschluss typischerweise die Dichte einer solchen Schicht erniedrigt. Bevorzugt umfasst die isolierende erste Schicht ein geschäumtes Polyolefin, besonders bevorzugt geschäumtes Polypropylen.

Im Falle einer ersten Schicht, die ein geschäumtes Polymer umfasst, kann es von Vorteil sein, dass auf deren Innenoder Aussenseite zusätzliche eine Schicht eines ungeschäumten Polymers vorgesehen ist. Geschäumte Polymere tendieren dazu, eine unebene Oberfläche aufzuweisen, so dass es je nach Anwendung oder auch aus ästhetischen Gesichtspunkten vorteilhaft sein kann, ein ungeschäumtes Polymer mit einer glatten Oberfläche aufzubringen. Eine solche zusätzliche Schicht wird üblicherweise eher dünn sein. Sie kann beispielsweise aus demselben Polymer wie die erste Schicht - nur einfach in ungeschäumter Form - bestehen. Ein typisches Beispiel wäre eine erste Schicht aus geschäumtem Polypropylen mit einer dünnen Aussenschicht aus ungeschäumtem Polypropylen.

Vorzugsweise weist die erste Schicht eine Dichte von weniger als 0.8 g/cm³, besonders bevorzugt von weniger als 0.6 g/cm³, auf. Die erste Schicht weist vorzugsweise also eine im Vergleich zum verwendeten Grundpolymer reduzierte Dichte auf, beispielsweise eine um 10% reduzierte Dichte.

Wie oben erwähnt, kann die relative Anordnung der ersten und zweiten Schicht grundsätzlich beliebig gewählt werden. Je nach Anwendung kann es aber von Vorteil sein, wenn die Schicht mit geringerer Dichte, d.h. die erste Schicht, innerhalb oder ausserhalb der Schicht mit der höheren Dichte, d.h. der zweiten Schicht, angeordnet ist.

Gemäss einer ersten bevorzugten Ausführungsform umgibt die erste Schicht die zweite Schicht. Die erste Schicht weist typischerweise eine glattere Oberfläche auf als die zweite Schicht. Eine äussere glatte Schicht bietet weniger Reibung beim Verlegen und kann dadurch einen Vorteil darstellen. Sie kann zudem auch eine Schutzfunktion für die meist eher etwas sprödere zweite Schicht übernehmen. Insbesondere für gewisse Verbindungstechniken, wie Muffenschweissen, Schweissen mit Elektroschweissmuffe oder eine Klemmverbindung mit einem Dichtring, ist eine äussere glatte Schicht ebenfalls vorteilhaft.

Gemäss einer zweiten bevorzugten Ausführungsform umgibt die zweite Schicht die erste Schicht. In Fällen wo die innere Schicht in direkten Kontakt mit dem zu transportierenden Medium kommt - und ganz besonders, wenn es sich dabei um Lebensmittel oder Trinkwasser handelt - ist es vorteilhaft, wenn die Innenoberfläche des Rohrs glatt ist, so dass sich keine Rückstände ansammeln können. Dies ist vor allem aus hygienischen Gründen wichtig. Bei einer glatten Innenoberfläche entsteht zudem weniger Druckverlust, was zu einer Energieeinsparung führt.

Gemäss einer bevorzugten Ausführungsform weist das Kunststoffrohr zwischen der ersten und der zweiten Schicht zusätzlich einen Haftvermittler auf. Ein solcher Haftvermittler verstärkt die Verbindung zwischen den beiden Schichten. Dies ist insbesondere dann vorteilhaft, wenn beim Einsatz des Rohrs, beispielsweise bei der Verbindung mit einem weiteren Rohr, die äussere Schicht im Bereich der Verbindung nicht von der inneren abgeschält werden soll.

Alternativ ist es aber auch möglich, dass ein Verbund zwischen den zwei Schichten gezielt verhindert wird, z.B. wenn die äussere Schicht teilweise abgeschält werden muss, um eine bestimmte Verbindungstechnik anwenden zu können (z.B. Schweissen mit Elektroschweissmuffe). Gemäss einer weiteren Alternative kann die Haftkraft auch zum Schälen zweckmässig eingestellt werden.

Gemäss einer bevorzugten Ausführungsform weist das erfindungsgemässe Kunststoffrohr eine Länge und ein Gewicht auf, welche die Handhabung des Rohrs durch einen einzelnen oder maximal zwei Arbeiter erlaubt. Vorzugsweise weist das Kunststoffrohr eine Länge von 3 bis 10 m auf, besonders bevorzugt von 5 bis 7 m, und insbesondere von ca. 6 m.

Zudem lässt sich das erfindungsgemässe Kunststoffrohr vorzugsweise auf einfache Weise mit einem weiteren erfindungsgemässen Kunststoffrohr verbinden, um so den Bau einer Leitung umfassend mehrere Rohre zu ermöglichen. Dazu weist das Kunststoffrohr vorzugsweise an mindestens einem Ende ein Verbindungsmittel auf zur Verbindung mit einem weiteren solchen Kunststoffrohr.

Zwei Rohre können beispielsweise mittels Schweissen (Stumpfschweissen, Muffenschweissen, Muffenschweissen mit Elektroschweissmuffe), durch eine Steckverbindung, durch eine Steckverbindung mit Bajonett-Sicherung, durch eine Flanschverbindung oder durch eine Schraubverbindung miteinander verbunden werden. Vorzugsweise weist das erfindungsgemässe Kunststoffrohr ein Gewinde auf. Besonders bevorzugt weist das Rohr an einem Ende ein Innengewinde und am anderen Ende ein korrespondierendes Aussengewinde auf. Dadurch können zwei Kunststoffrohre besonders rasch, einfach und sicher miteinander verbunden werden.

Das erfindungsgemässe Kunststoffrohr kann beispielsweise durch Co-Extrusion oder Ummanteln hergestellt werden. In einem weiteren Aspekt betrifft die vorliegende Erfindung somit auch die Herstellung eines erfindungsgemässen Kunststoffrohrs mittels Co-Extrusion oder Ummanteln. Alternativ könnte das erfindungsgemässe Rohr auch durch Ineinanderschieben von zwei separaten Schichten mit unterschiedlichen Eigenschaften hergestellt werden, wobei optional zwischen den beiden Schichten auch vorübergehend ein Hohlraum, z.B. ein Ringspalt, vorhanden sein kann, der dann beispielsweise ausgeschäumt oder mit einem anderen Medium, z.B. einem schweren Medium wie Sand, gefüllt wird. Daneben wäre es auch möglich, eine der beiden Schichten mit der anderen zu umwickeln, wobei letztere beispielsweise in Form eines geschäumten oder verfüllten Bandes vorliegen kann.

Das erfindungsgemässe Kunststoffrohr eignet sich besonders gut für eine Verwendung als Wasserleitungsrohr, Abwasserleitungsrohr oder Erdwärmesondenrohr, insbesondere als Zentralrohr in einer koaxialen Erdwärmesonde oder für eine U-förmige oder Doppel-U-förmige Erdwärmesonde.

Bei Wasser- und Abwasserleitungsrohren kann, wie oben beschrieben, insbesondere die Schallisolation wichtig sein, während bei einem Zentralrohr einer koaxialen Erdwärmesonde eher die Wärmeisolation gegenüber dem umgebenden, allenfalls flexiblen, Aussenrohr im Vordergrund steht. Durch die Kombination einer ersten Schicht mit isolierenden Eigenschaften und einer zweiten Schicht mit höherer Dichte kann einem durch Wasser bewirkten Auftrieb entgegengewirkt werden, z.B. bei einer Erdwärmesonde in einem (meist senkrechten) Bohrloch oder bei einer Wasserleitung, die durch ein Gewässer verläuft. Dieser Auftrieb wird durch die geringe Dichte der ersten Schicht verursacht und durch die hohe Dichte der zweiten Schicht kompensiert.

In einem weiteren Aspekt betrifft die vorliegende Erfindung zudem die Herstellung einer Wasserleitung, einer Abwasserleitung, oder einer Erdwärmesonde. Dabei werden mehrere Kunststoffrohre gemäss der vorliegenden Erfindung, insbesondere solche mit den oben beschriebenen Verbindungsmitteln, an ihren Enden miteinander verbunden. Durch das einfache Zusammensetzen der erfindungsgemässen Kunststoffrohre lassen sich auf unkomplizierte und effiziente Weise beliebig lange Leitungen für Flüssigkeiten bauen, die optimal an die jeweiligen Erfordernisse angepasst sind.

Die vorliegende Erfindung wird nachfolgend anhand von in den schematischen Zeichnungen gezeigten Beispielen weiter veranschaulicht.

Es zeigt:
- Fig. 1a: eine perspektivische Ansicht eines Abschnitts eines Kunststoffrohrs mit drei Schichten gemäss einer ersten Ausführungsform der vorliegenden Erfindung, wobei die einzelnen Schichten durch teilweises Freilegen sichtbar gemacht sind;
- Fig. 1b: einen Querschnitt durch das Kunststoffrohr aus Fig. 1a;
- Fig. 1c: eine Seitenansicht des Kunststoffrohrs aus Fig. 1a;
- Fig. 2a: eine perspektivische Ansicht eines Abschnitts eines Kunststoffrohrs mit drei Schichten gemäss einer zweiten Ausführungsform der vorliegenden Erfindung, wobei die einzelnen Schichten durch teilweises Freilegen sichtbar gemacht sind;
- Fig. 2b: einen Querschnitt durch das Kunststoffrohr aus Fig. 2a; und
- Fig. 2c: eine Seitenansicht des Kunststoffrohrs aus Fig. 2a.

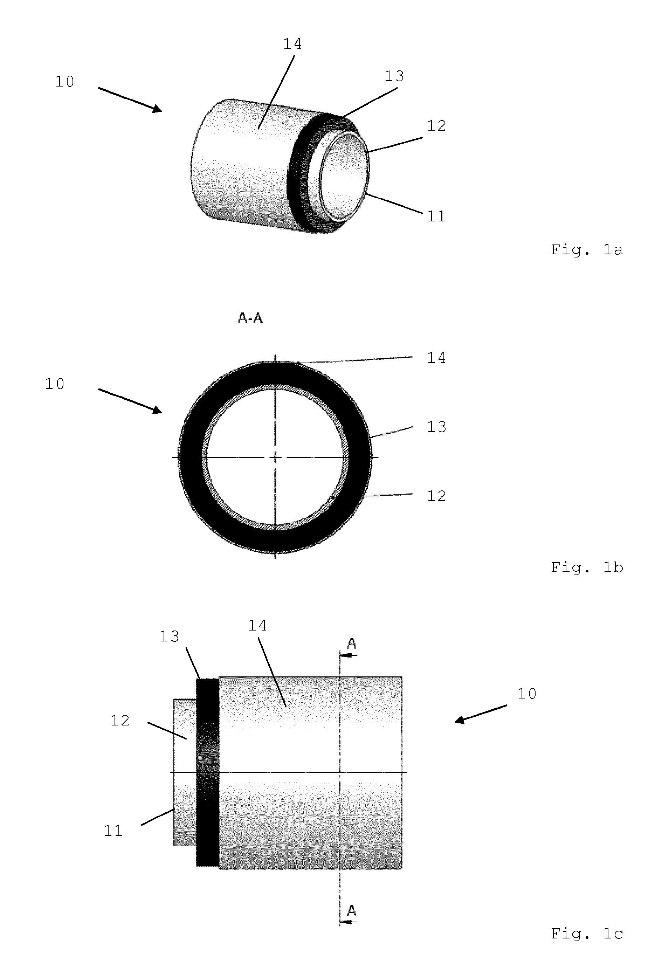

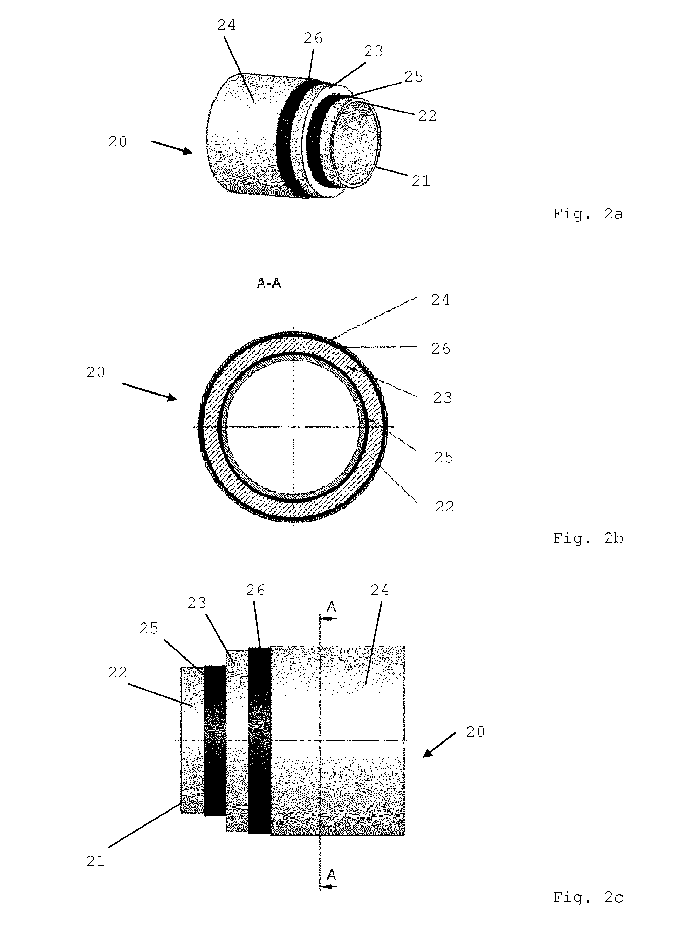

Die Figuren 1a-1c und 2a-2c zeigen je einen Abschnitt eines erfindungsgemässen Kunststoffrohrs 10, 20 in perspektivischer Darstellung. Die beiden gezeigten Kunststoffrohre 10, 20 weisen jeweils drei konzentrisch angeordnete Schichten auf. Beide Rohre könnten aber auch weniger oder mehr Schichten aufweisen, beispielsweise zwei, vier, fünf oder sechs Schichten. Dabei zeigen die Figuren 1a und 2a jeweils eine perspektivische Darstellung eines solchen Kunststoffrohrs 10, 20, die Figuren 1b und 2b einen Querschnitt und 1c und 2c eine Seitenansicht.

Zur besseren Veranschaulichung sind bei den gezeigten Kunststoffrohren 10, 20 die einzelnen Schichten von einem ersten Ende 11, 21 her teilweise freigelegt worden. Dies dient einzig der zeichnerischen Darstellung; bei den erfindungsgemässen Kunststoffrohren erstrecken sich die einzelnen Schichten üblicherweise über die volle Länge und über den vollen Umfang des Rohrs. Nur in Ausnahmefällen weisen Teilabschnitte nicht sämtlichen Schichten auf.

Das Kunststoffrohr 10 aus den Figuren 1a-1c umfasst von Innen nach Aussen gesehen eine zweite Schicht 12, eine erste Schicht 13 und eine Deckschicht 14.

Das Kunststoffrohr 20 aus den Figuren 2a-2c umfasst von Innen nach Aussen gesehen ebenfalls eine zweite Schicht 22, eine erste Schicht 23 und eine Deckschicht 24. Zusätzlich ist zwischen der zweiten Schicht 22 und der ersten Schicht 23 ein erster Haftvermittler 25 angeordnet, und zwischen der ersten Schicht 23 und der Deckschicht 24 ein zweiter Haftvermittler 26.

Die zweite Schicht 12, 22 weist eine Dichte von ungefähr 2.7 g/cm³ auf und besteht im vorliegenden Fall aus Polypropylen, Polyethylen oder Polybuten, das mit einem Mineralstoff, Magnetit und/oder Bariumsulfat verfüllt ist. Sie könnte alternativ aber auch aus einem anderen Kunststoffmaterial und/oder einem anderen Füllstoff bestehen.

Die erste Schicht 13, 23 weist eine Dichte von ungefähr 0.6 g/cm³ auf und besteht im vorliegenden Fall aus geschäumtem Polypropylen. Sie könnte alternativ aber auch aus einem anderen Kunststoffmaterial bestehen.

Die Deckschicht 14, 24 ist optional. Im vorliegenden Fall besteht die Deckschicht 14, 24 aus ungeschäumtem Polypropylen und gewährleistet eine glatte Oberfläche.

Die Haftvermittler 25, 26 beim Kunststoffrohr 20 gemäss der zweiten Ausführungsform sorgen für eine gute Verbindung der Schichten zueinander. Als Haftvermittler eignen sich insbesondere speziell auf die zu verbindenden Schichten angepasste Polymere.

Das Kunststoffrohr 10 gemäss der ersten Ausführungsform wird vorzugsweise mittels Co-Extrusion hergestellt, während die Herstellung des Kunststoffrohrs 20 gemäss der zweiten Ausführungsform vorzugsweise mittels Ummanteln erfolgt.

Die erfindungsgemässen Kunststoffrohre 10, 20 eignen sich beispielsweise als Wasser- oder Abwasserleitungsrohre oder für ein Zentralrohr einer koaxialen Erdwärmesonde.

## Patentansprüche

1. Kunststoffrohr (10, 20) zur Leitung von Flüssigkeiten, bestehend aus mindestens zwei konzentrisch angeordneten, miteinander verbundenen Schichten, wobei eine erste Schicht (13, 23) aus einem thermoplastischen Kunststoffmaterial besteht und eine Dichte von weniger als 1.0 g/cm³ aufweist, **dadurch gekennzeichnet, dass** eine zweite Schicht (12, 22) eine Dichte von mehr als 1.0 g/cm³ aufweist.

2. Kunststoffrohr (10, 20) gemäss Anspruch 1, **dadurch gekennzeichnet, dass** die zweite Schicht (12, 22) eine Dichte von 1.0 bis 5.0 g/cm³ aufweist, vorzugsweise von 2.0 bis 3.0 g/cm³ und besonders bevorzugt von 2.3 bis 2.9 g/cm³.

3. Kunststoffrohr (10, 20) gemäss Anspruch 1 oder 2, **dadurch gekennzeichnet, dass** die zweite Schicht (12, 22) aus einem Kunststoffmaterial mit einem eingearbeiteten Füllstoff besteht.

4. Kunststoffrohr (10, 20) gemäss Anspruch 3, **dadurch gekennzeichnet, dass** der eingearbeitete Füllstoff in Form von Pulver, Plättchen, Kugeln und/oder Fasern vorliegt.

5. Kunststoffrohr (10, 20) gemäss Anspruch 3 oder 4, **dadurch gekennzeichnet, dass** der eingearbeitete Füllstoff ein Mineral, Kreide, Glas und/oder Metall umfasst, bevorzugt Bariumsulfat und/oder Magnetit.

6. Kunststoffrohr (10, 20) gemäss einem der Ansprüche 3 bis 5, **dadurch gekennzeichnet, dass** der eingearbeitete Füllstoff eine höhere Dichte aufweist als das Kunststoffmaterial der zweiten Schicht (12, 22), insbesondere eine Dichte von mindestens 2.0 g/cm³.

7. Kunststoffrohr (10, 20) gemäss einem der Ansprüche 3 bis 6, **dadurch gekennzeichnet, dass** das Kunststoffmaterial der zweiten Schicht ein Polyolefin umfasst, insbesondere Polyethylen, Polypropylen, Polybuten oder eine Mischung davon.

8. Kunststoffrohr (10, 20) gemäss einem der Ansprüche 1 bis 7, **dadurch gekennzeichnet, dass** die erste Schicht (13, 23) isolierende Eigenschaften aufweist, insbesondere Wärme- oder Schall-isolierende Eigenschaften.

9. Kunststoffrohr (10, 20) gemäss Anspruch 8, **dadurch gekennzeichnet, dass** die isolierende erste Schicht (13, 23) ein geschäumtes Polymer umfasst, bevorzugt ein geschäumtes Polyolefin, besonders bevorzugt geschäumtes Polypropylen.

10. Kunststoffrohr (10, 20) gemäss einem der Ansprüche 1 bis 9, **dadurch gekennzeichnet, dass** die erste Schicht (13, 23) die zweite Schicht (12, 22) umgibt.

11. Kunststoffrohr (10, 20) gemäss einem der Ansprüche 1 bis 9, **dadurch gekennzeichnet, dass** die zweite Schicht (12, 22) die erste Schicht (13, 23) umgibt.

12. Kunststoffrohr (10, 20) gemäss einem der Ansprüche 1 bis 11, **dadurch gekennzeichnet, dass** das Kunststoffrohr zwischen der ersten Schicht (13, 23) und der zweiten Schicht (12, 22) zusätzlich einen Haftvermittler (25, 26) aufweist.

13. Kunststoffrohr (10, 20) gemäss einem der Ansprüche 1 bis 12, **dadurch gekennzeichnet, dass** das Kunststoffrohr (10, 20) eine Länge von 3 bis 10 m, vorzugsweise von 5 bis 7 m aufweist, insbesondere von ca. 6 m, und vorzugsweise an mindestens einem Ende ein Verbindungsmittel aufweist zur Verbindung mit einem weiteren Kunststoffrohr (10, 20) gemäss Anspruch 13, insbesondere ein Gewinde.

14. Verwendung des Kunststoffrohrs (10, 20) gemäss einem der Ansprüche 1 bis 13 als Wasserleitungsrohr, Abwasserleitungsrohr oder Erdwärmesondenrohr, insbesondere als Zentralrohr in einer koaxialen Erdwärmesonde.

15. Verfahren zur Herstellung einer Wasserleitung, einer Abwasserleitung, oder einer Erdwärmesonde, umfassend den Schritt, dass mehrere Kunststoffrohre (10, 20) gemäss Anspruch 13 an ihren Enden miteinander verbunden werden.
